# EUROPÄISCHE PATENTSCHRIFT

(11) **EP 2 127 786 B1**
(45) Veröffentlichungstag und Bekanntmachung des Hinweises auf die Patenterteilung: **09.04.2014**
(21) Anmeldenummer: 09405076.2
(22) Anmeldetag: 04.05.2009
(51) Int. Cl.: B22F 3/15, B22F 5/10, B22F 7/06, B22F 7/08

(54) **Heizkörper für Durchflussmedien und Verfahren zu dessen Herstellung**
Heater for flow media and method for its manufacture
Corps de chauffage pour milieux d'écoulement et son procédé de fabrication

(30) Priorität: 29.05.2008 CH 8192008
(43) Veröffentlichungstag der Anmeldung: 02.12.2009
(73) Patentinhaber: Kennametal Europe GmbH, 8212 Neuhausen am Rheinfall (CH)
(72) Erfinder: Hofer, Beat, 4552 Derendingen (CH); Teuma, Valéry, 2504 Biel (CH); Bruder, Lothar, 3294 Büren an der Aare (CH)
(74) Vertreter: AMMANN PATENTANWÄLTE AG BERN

(56) Entgegenhaltungen:
- EP-A- 1 657 010
- JP-A- 63 222 412

## Beschreibung

Die Erfindung betrifft einen Heizkörper für Durchflussmedien nach dem Oberbegriff von Patentanspruch 1, einen Extruder mit dem Heizkörper sowie ein Verfahren zur pulvermetallurgischen Herstellung des Heizkörpers.

Ein derartiger Heizkörper und ein Verfahren zu dessen Herstellung ist aus der EP-A1-1 657 010 der gleichen Anmelderin bekannt. Das Dokument offenbart ein heissisostatisches Pressverfahren (HIP-Verfahren), in dem ein rohrförmiger Heizkörper hergestellt wird. In die Kanalwandung des Heizkörpers ist eine Rohrleitung integriert. Durch Einleiten überhitzten Dampfes in die Rohrleitung wird eine Wärmezufuhr an den Heizkörper erreicht. Der Heizkörper wird als Arbeitszylinder eines Ein- oder Zweischneckenextruders eingesetzt, wie diese u.a. bei der Herstellung von Kunststoffen, insbesondere zur Aufbereitung, Formgebung und mechanischen Vermischung, Verwendung finden. Dabei wird je nach Anwendungsart der Arbeitszylinder gekühlt oder geheizt, um eine Überhitzung des Materials zu verhindern oder um das Material im fliessfähigen Zustand zu halten.

Während der Herstellung des Heizkörpers sind, aufgrund der hohen Temperatur- und Druckeinwirkungen während des HIP-Vorgangs, Vorkehrungen zu treffen, durch welche eine Zerstörung der Rohrleitung vermieden wird. Hierzu wird die Rohrleitung an einem Ende aus dem Heizkörper herausgeführt und endseitig offen gehalten, um einen Druckausgleich zur Umgebung zu gestatten.

Ein derartiger Heizkörper ist jedoch mit einigen Nachteilen behaftet. Denn einerseits ist die Realisierung einer externen Wärmezufuhr mittels überhitzten Dampfes relativ umständlich und kostenintensiv, andererseits wäre auch eine verbesserte Steuerungsmöglichkeit des Aufheizvorgangs und der Beheizung wünschenswert, sowie die Möglichkeit eines schnellen Eingriffs bei auftretenden Störungen im Temperaturverlauf.

Hiervon ausgehend liegt der Erfindung die Aufgabe zugrunde, einen Heizkörper der eingangs genannten Art derart weiterzubilden, dass eine schnellere, einfachere und besser kontrollierbare Aufheizung und Beheizung des Heizkörpers ermöglicht ist.

Diese Aufgabe wird durch einen Heizkörper mit den Merkmalen von Patentanspruch 1 gelöst. Erfindungsgemäss wird durch die Implementierung einer elektrischen Heizleitung ein geringerer Abstand des Erhitzungsmediums zum Durchflussraum ermöglicht, so dass ein schnelles Aufheizen des Durchflussmediums bei geringem Energieverlust möglich ist. Der Heizvorgang ist einfach steuerbar und Störungen im Temperaturverlauf schnell nachregelbar. Ebenso ist die Gefahr von Undichtigkeiten in der Heizleitung verringert, wie sie bei einer Dampfrohrleitung auftreten können.

Eine weitere Aufgabe der Erfindung besteht darin, ein Verfahren anzugeben, durch welches ein solcher Heizkörper pulvermetallurgisch auf einfache Art und Weise herstellbar ist.

Diese Aufgabe wird durch ein Verfahren gemäss Patentanspruch 10 gelöst. Erfindungsgemäss wird durch das wärme- und druckstabile Material, mit welchem die Heizleitung befüllt ist, eine Zerstörung der Heizleitung während des HIP-Vorgangs verhindert. Eine weitere Funktion des Pulvermaterials besteht darin, eine elektrische Isolierung des Heizdrahtes vom Rohrmantel und der Kanalwandung bereitzustellen.

Die weiteren Patentansprüche geben bevorzugte Ausführungsformen des Heizkörpers und dessen Herstellungsverfahrens an, sowie eine bevorzugte Verwendung des Heizkörpers und einen Extruder.

Nachfolgend ist die Erfindung anhand bevorzugter Ausführungsbeispiele unter Bezugnahme auf die Figuren näher erläutert, anhand welcher sich weitere Eigenschaften und Vorteile der Erfindung ergeben. Die Figuren, die Beschreibung und die Patentansprüche enthalten zahlreiche Merkmale in Kombination, die der Fachmann auch einzeln betrachten und zu sinnvollen weiteren Kombinationen zusammenfassen wird. Dabei zeigen:
- Fig. 1:: eine schematische Schnittdarstellung einer Heizleitung;
- Fig. 2:: eine schematische Schnittansicht eines Heizkörpers;
- Fig. 3:: eine schematische Schnittansicht einer Vorrichtung zur Herstellung des in Fig. 2 gezeigten Heizkörpers; und
- Fig. 4:: eine perspektivische Darstellung der in Fig. 3 gezeigten Vorrichtung.

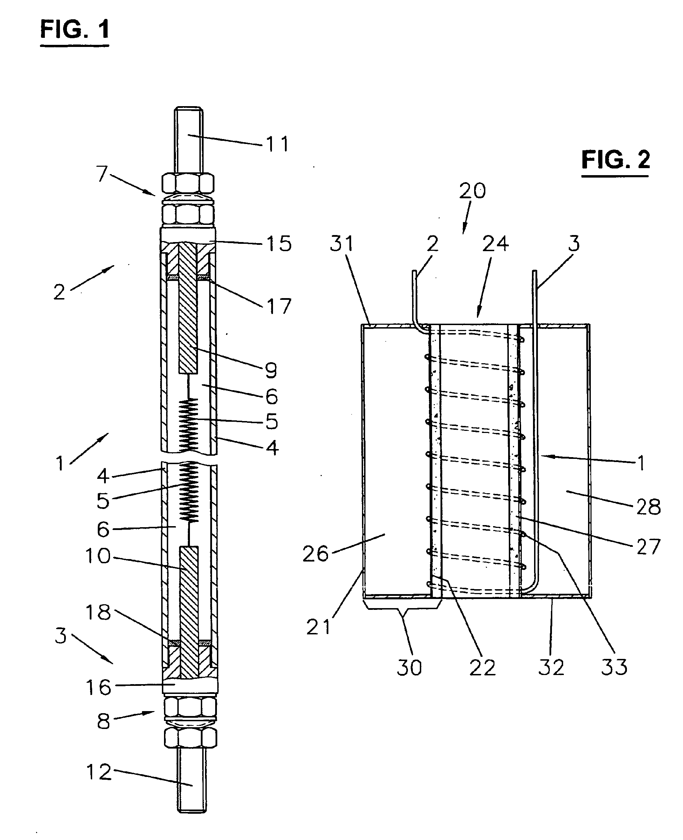

Die Fig. 1 zeigt die beiden Endabschnitte 2 und 3 einer elektrischen Heizleitung 1 in einer schematischen Schnittansicht. Die Endabschnitte 2 und 3 sind durch einen rohrförmigen, metallischen Leitungsmantel 4 miteinander verbunden, entlang dessen Innenraum sich axial ein Heizdraht 5 erstreckt.

Aussenseitig ist an den beiden Endabschnitten 2 und 3 der Heizleitung 1 jeweils ein Kontaktelement 7 und 8 angeordnet. Die Kontaktelemente 7 und 8 weisen einen Kontaktstift 9, 10 auf, der jeweils in ein offenes Ende des Leitungsmantels 4 hineinragt und dort mit jeweils einem Ende des Heizdrahts 5 kontaktiert ist. Das gegenüberliegende Ende der Kontaktelemente 7, 8 ist durch einen Anschlussstift 11, 12 für die elektrische Stromversorgung gebildet, der über jeweils einen Deckelabschnitt 13, 14 mit dem Kontaktstift 9, 10 leitend verbunden ist. Der Deckelabschnitt 13, 14 entspricht in seinem Aussendurchmesser im Wesentlichen dem Leitungsmantel 4 und mündet in Richtung der Heizleitung 1 in jeweils einen auf den Kontaktstift 9, 10 aufgebrachten Isolationsring 15, 16. Der Isolationsring 15, 16 weist einen verjüngten Endabschnitt auf, der im Wesentlichen dem Innendurchmesser des Leitungsmantels 4 entspricht und der in denselben hineingesteckt ist. Der dickere Abschnitt des Isolationsrings 15, 16 schliesst in dem sich verjüngenden Bereich an das jeweils freie Ende des Leitungsmantels 4 an. Die derart bewirkte elektrische Isolation zwischen Leitungsmantel 4 und den jeweiligen Kontaktelementen 7, 8 wird durch eine Isolationsmasse 17, 18 weiter verstärkt, die um den verjüngten Abschnitt des Isolationsrings 15, 16 herum angeordnet ist.

Der Heizdraht 5 ist im Innenraum des Leitungsmantels 4 über seine Gesamtlänge hinweg in einen Isolationsmantel 6 eingebettet, der aus einem elektrisch isolierenden Material besteht, vorzugsweise aus Magnesiumoxid. Zusätzlich zeichnet sich die verwendete Isolierung durch sehr hohe Wärme- und Druckstabilität aus, so dass eine hohe Temperatur- und Kompressionresistenz des Isolationsmantels 6 erzielt ist, insbesondere bei Druckeinwirkungen oberhalb von 1000 bar und Temperatureinwirkungen von über 1000 °C, also bei Rahmenbedingungen, die bei einem heissisostatischen Pressverfahren (HIP-Verfahren) vorherrschend sind.

Zum Erreichen dieser Materialeigenschaften des Isolationsmantels 6 wird die Heizleitung 1 in ihrem Mittelabschnitt wendelförmig gebogen und durch einen Sintervorgang behandelt, wodurch das ursprünglich pulverförmige Rohmaterial des Isolationsmantels 6 zu einem keramischen oder keramikähnlichen Material zusammengebacken wird und dadurch temperatur- und kompressionsresistent in der Wendelform verfestigt ist. Der Innendurchmesser der Wendel 33 ist bedarfsmässig an einen zu fertigenden Heizkörper 20 angepasst, wie er in Fig. 2 gezeigt ist und nachfolgend näher erläutert ist. Alternativ ist auch die Formung einer andersartig gebogenen, insbesondere längsgestreckten, Heizleitung 1 denkbar, um der Geometrie und den gewünschten Heizeigenschaften des zu fertigenden Heizkörpers 20 Rechnung zu tragen.

Der in Fig. 2 gezeigte in einem HIP-Verfahren gefertigte Heizkörper 20 für Durchflussmedien weist eine Kanalwandung 30 auf, die einen leeren und beidseitig offenen Innenraum 24 des Heizkörpers 20 begrenzt, durch welchen ein Durchflusskanal für die Durchflussmedien gebildet ist. Die Kanalwandung 30 umfasst ein metallisches Aussenrohr 21 und ein metallisches Innenrohr 22 jeweils gleicher Länge. Der Zwischenraum 26 von Aussenrohr 21 und Innenrohr 22 besteht im Wesentlichen aus einer Gehäuseschicht 28 aus einem pulvermetallurgisch gefertigten Material.

Der Innenmantel des Innenrohrs 22 ist homogen mit einer inneren pulvermetallurgisch gefertigten Materialschicht 27 versehen, die gegenüber der Gehäuseschicht 28 eine geringere Dicke und eine erhöhte Härte aufweist. Der Innenumfang dieser Schicht 27 grenzt direkt an den leeren und beidseitig offenen Innenraum 24 des Heizkörpers 20 und wirkt als Verschleissschutzschicht 27 gegen die Beanspruchung des Heizkörpers 20. Dabei sind Dicke und Härte der Verschleissschutzschicht 27 an die Beanspruchung des Heizkörpers 20 durch den jeweils vorgesehenen Verwendungszweck angepasst, beispielsweise an den Verschleiss durch die vorgesehenen Durchflussmedien, Korrosion, etc.

Die Ober- und Unterseite der Kanalwandung 30 ist jeweils durch eine obere bzw. untere Verschlussplatte 31, 32 abgedeckt.

Die in ihrem Mittelbereich 33 wendelförmig gebogene Heizleitung 1 grenzt im äusseren Zwischenraum 26 an das Innenrohr 22 an, derart, dass sie den Durchflusskanal 24 in Axialrichtung umläuft. Die beiden Endabschnitte 2, 3 der Heizleitung 1 sind längsgestreckt ausgebildet und durch die obere Verschlussplatte 31 parallel zueinander aus der Kanalwandung 30 hinausgeführt, um eine Kontaktierung des Heizleiters 1 an einer Seite des Heizkörpers 20 zu ermöglichen.

Der beschriebene Heizkörper 20 ist in einer Spritzgiessmaschine oder einer Extruderanlage, insbesondere einem Schneckenextruder oder Zweischneckenextruder, zur Aufbereitung oder zur Formgebung extrudierbarer Stoffe einsetzbar. Beispielsweise kann eine Schneckenwelle im Eingangsbereich des Durchflusskanals 24 axial festgelegt sein, durch deren Rotationsbewegung das Extrudat durch den Durchflusskanal 24 und aus dessen Ausgangsöffnung gepresst wird. Die benötigte Wärmezufuhr, z.B. zur Plastifizierung der extrudierbaren Stoffe, wird durch die Heizleitung 1 bereitgestellt. Durch die kanalnahe Anordnung der Heizleitung 1 direkt an der Verschleissschutzschicht 27 ist eine effiziente und energiesparende Aufheizung des Durchflussmediums gewährleistet.

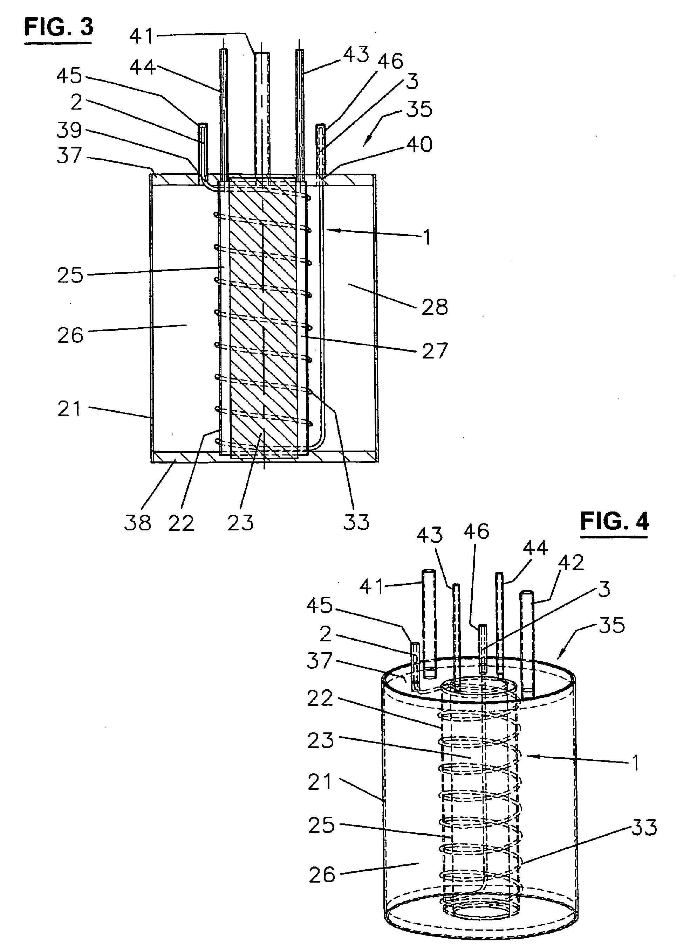

Die Figuren 3 und 4 zeigen eine Vorrichtung 30 zur pulvermetallurgischen Herstellung des in Fig. 2 gezeigten Heizkörpers 20, anhand welcher das Herstellungsverfahren im folgenden beschrieben ist. Da die Vorrichtung dabei einem HIP-Verfahren unterzogen wird, wird diese nachfolgend als HIP-Kapsel 35 bezeichnet.

Das Aussenrohr 21 und das Innenrohr 22 aus einem Stahlblech werden ineinander verschachtelt, wodurch der Zwischenraum 26 gebildet wird. Ein Zylinderkörper 34 mit kleinerem Durchmesser wird in umfänglich homogener Beabstandung in das Innenrohr 22 eingebracht, so dass zwischen der Innenwandung des Innenrohrs 22 und dem Zylinderkörper 34 ein weiterer, innerer Zwischenraum 25 entsteht. Der Zylinderkörper 34 ist ein massiver Zylinderkern, der aus einem wärme- und druckstabilen Material für das folgende heissisostatische Pressverfahren besteht. Alternativ ist auch denkbar, anstelle eines massiven Zylinderkerns 34 ein zweites Innenrohr kleineren Durchmessers aus Stahlblech zu verwenden.

Die temperatur- und kompressionsresistente und in ihrem Mittelabschnitt 33 wendelförmig vorgeformte Heizleitung 1 wird entlang des Aussenumfangs des ersten Innenrohres 22 fixiert oder gelegt. Durchmesser, Länge und Steigung der Wendel 33 sind individuell den masslichen und verfahrenstechnischen Anforderungen angepasst. Die Endabschnitte 2 und 3 der Heizleitung 1 werden geradlinig und parallel zueinander aus dem oberseitig offenen Ende des äusseren Zwischenraums 26 nach aussen geführt. Oben und unten wird je eine kreisförmige Deckplatte 37, 38 angebracht, wobei die Endabschnitte 2, 3 der Heizleitung 1 durch je einen Durchbruch 39, 40 aus der oberen Deckplatte 37 hinausgeführt sind.

Über zwei Einfüll-/Evakuierstutzen 41, 42 auf der oberen Deckplatte 37 wird nun der äussere Zwischenraum 26 mit einem Stahlpulver befüllt, z.B. der Qualität 1.8519, wodurch die Gehäuseschicht 28 des Heizkörpers 2 gebildet werden soll. Durch zwei weitere Einfüll-/Evakuierstutzen 42, 43 wird dann der innere Zwischenraum mit einem Stahlpulver höherer Qualität befüllt, z.B. Qualität Stellite 1. Die aus diesem Pulver zu fertigende Schicht dient zum Verschleiss- oder Korrosionsschutz des Heizkörpers 2.

Anschliessend werden die hinausgeführten Enden 2, 3 der Heizleitung durch jeweils ein Schutzrohr 45, 46 umgeben, welches mit einem wärme- und druckstabilen Pulvermaterial befüllt wird. Vorzugsweise wird hierzu ein oxidisches Material, beispielsweise Aluminiumoxid, verwendet. Dadurch werden auch die aus der HIP-Kapsel 30 herausragenden Endabschnitte 2, 4 der Heizleitung 1 während der Verdichtung beim heissisostatischen Pressen geschützt.

Die HIP-Kapsel 30 mit der Pulvermischung wird nun evakuiert und die Einfüll-/Evakuierstutzen 41-44 und die Schutzrohre 45, 46 dichtgeschweisst. Die HIP-Kapsel 30 wird in einer heissisostatischen Presse bei einer Temperatur von zwischen 500 und 1300 °C mit 1 bis 10 Stunden Haltezeit einem Druck von 1000 bar ausgesetzt und danach langsam in der HIP-Anlage abgekühlt. Da der Innenraum der Heizleitung 1 mit dem Isolationsmantel 6 gefüllt ist, der aus dem wärme- und druckstabilen Material besteht, wird diese nicht zusammengedrückt. Zusätzlich sind die Endabschnitte 2, 4 der Heizleitung 1 aussenseitig durch ein keramisches Pulvermaterial in den Schutzrohren 45, 46 geschützt, welches durch das HIP-Verfahren nicht oder nur wenig zusammengedrückt wird. Das in der Kapsel eingeschlossene Pulver versintert unter dem Druck und der Temperatur während der Haltezeit.

Der erhaltene Körper wird nach dieser Behandlung auf die Dichte geprüft und nach Gutbefund meachanisch auf die gewünschte Endform bearbeitet. Hierzu werden die obere und untere Deckplatte 37, 38 verdünnt oder vollständig abgetragen, um den Zylinderkern 36 aus dem Innenraum 24 zu entfernen. Ebenso werden die Einfüll-/Evakuierstutzen 41-44 und die Schutzrohre 45, 46 entfernt.

Abwandlungen der Erfindung sind dem Fachmann aus der obigen Darstellung von Beispielen im Rahmen der Erfindung zugänglich, der allein durch die Ansprüche definiert ist. So ist beispielsweise denkbar:
- eine beliebige Beabstandung der Heizleitung 1 von einem der Innenrohre 22, 23 anstatt auf diesem aufzuliegen;
- eine beliebige Form und Anordnung der Heizleitung 1 in dem Heizkörper 20 anstelle der wendelförmigen Biegung derselben;
- die Anordnung mehrerer Heizleitungen 1 in dem Heizkörper 20 und/oder die Anordnung einer zusätzlichen Kühlungsleitung;
- die Verwendung verschiedenartiger Pulverkombinationen in der HIP-Kapsel 30 zur Herstellung des Heizkörpers 20.

## Patentansprüche

1. Heizkörper (20) für Durchflussmedien, insbesondere für extrudierbare Werkstoffe, der durch heissisostatisches Pressen herstellbar ist, mit einer Kanalwandung (30), **dadurch gekennzeichnet, dass** in die Kanalwandung (30) eine elektrische Heizleitung (1) mit einem Heizdraht (5) und einem Isolationsmantel (6) für diesen implementiert ist, wobei der Isolationsmantel (6) aus einem wärme- und druckstabilen Material besteht, welches gegenüber den Herstellungsbedingungen resistent ist.

2. Heizkörper nach Anspruch 1, **dadurch gekennzeichnet, dass** das wärme- und druckstabile Material gegenüber dem Verdichtungsdruck während des heissisostatischen Pressens kompressionsresistent ist und/oder gegenüber der Temperatur während des Pressens resistent ist.

3. Heizkörper nach Anspruch 1 oder 2, **dadurch gekennzeichnet, dass** das wärme- und druckstabile Material durch ein gesintertes Rohmaterial gebildet ist.

4. Heizkörper nach einem der Ansprüche 1 bis 3, **dadurch gekennzeichnet, dass** der Isolationsmantel (6) aus einem oxidischen Rohstoff, beispielsweise Magnesiumoxid, gefertigt ist.

5. Heizkörper nach einem der Ansprüche 1 bis 4, **dadurch gekennzeichnet, dass** die Heizleitung (1) wendelförmig gebogen und sie die Durchflussrichtung umlaufend angeordnet ist.

6. Heizkörper nach einem der Ansprüche 1 bis 5, **dadurch gekennzeichnet, dass** die beiden Endabschnitte (2, 3) der Heizleitung (1) längsgestreckt ausgebildet sind und nebeneinanderliegend aus einem Kanalwandungsende hinausragen.

7. Heizkörper nach Anspruch 6, **dadurch gekennzeichnet, dass** an den beiden Enden der Heizleitung (1) jeweils ein Kontaktelement (7, 8) für den Heizdraht (5) angeordnet ist.

8. Heizkörper nach einem der Ansprüche 1 bis 7, **dadurch gekennzeichnet, dass** ein innerer Radialabschnitt der Kanalwandung (30) durch eine Verschleissschutzschicht (27) und ein äusserer Radialabschnitt durch eine Gehäuseschicht (28) gebildet ist, wobei die Verschleissschutzschicht (27) und die Gehäuseschicht (28) aus unterschiedlichen heissisostatischen Presswerkstoffen gefertigt sind.

9. Verwendung eines Heizkörpers (20) nach einem der Ansprüche 1 bis 8 als Formgebungsteil für extrudierbare Werkstoffe.

10. Extruder mit mindestens einer in einem Extruderrohr axial festgelegten Extruderschnecke, **dadurch gekennzeichnet, dass** das Extruderrohr mindestens einen Heizkörper (20) nach einem der Ansprüche 1 bis 8 aufweist.

11. Verfahren zur pulvermetallurgischen Herstellung eines Heizkörpers (20) nach einem der Ansprüche 1 bis 8, wobei ein Innenrohr (22) in einem Aussenrohr (21) angeordnet wird, so dass ein Zwischenraum (26) entsteht, **dadurch gekennzeichnet, dass**
- in den Zwischenraum (26) mindestens ein Leitungsmantel (4) eingebracht wird, entlang dessen Innenraum (6) sich der Heizdraht (5) erstreckt und der mit einem wärme- und druckstabilen Material befüllt ist, welches gegenüber dem Verdichtungsdruck während des heissisostatischen Pressens kompressionsresistent und gegenüber der Temperatur während des Pressens resistent ist;
- der Zwischenraum (26) mit einem Metallpulver gefüllt wird und dicht verschlossen wird, um eine gefüllte HIP-Kapsel (35) zu bilden; und
- die HIP-Kapsel (35) der heissisostatischen Pressung unterworfen wird, um aus dem Metallpulver einen massiven Metallkörper zu erzeugen.

12. Verfahren nach Anspruch 11, **dadurch gekennzeichnet, dass** das wärme- und druckstabile Material durch ein gesintertes Rohmaterial, beispielsweise aus Magnesiumoxid, gebildet ist.

13. Verfahren nach Anspruch 11 oder 12, **dadurch gekennzeichnet, dass** das gesinterte Rohmaterial durch den Sintervorgang in einer Wendelform (33) verfestigt ist.

14. Verfahren nach einem der Ansprüche 11 bis 13, **dadurch gekennzeichnet, dass** der Leitungsmantel (4) mit beiden Enden aus der Oberseite des Zwischenraums (26) hinausgeführt wird.

15. Verfahren nach Anspruch 14, **dadurch gekennzeichnet, dass** die hinausgeführten Enden (2, 3) des Leitungsmantels (4) durch jeweils ein Schutzrohr (45, 46) umgeben werden, welches anschliessend mit einem wärme- und druckstabilen Pulvermaterial, vorzugsweise aus einem oxidischen Rohstoff, insbesondere bevorzugt Aluminiumoxid, befüllt und dicht verschlossen wird.

16. Verfahren nach einem der Ansprüche 11 bis 15, **dadurch gekennzeichnet, dass** der Leitungsmantel (4) im Wesentlichen am Innenrohr anliegend angeordnet wird.

17. Verfahren nach einem der Ansprüche 11 bis 16, **dadurch gekennzeichnet, dass** im Innenrohr (23) mindestens ein Zylinderkörper (34) aus einem wärme- und druckstabilen Material angeordnet wird.

## Claims

1. Heater (20) for flow media, more particularly for extrudable materials, that is producible by hot isostatic pressing and comprises a channel wall (30), **characterised in that** an electric heating cable (1) having a heating wire (5) and an insulating sheath (6) for the latter is implemented in the channel wall (30), the insulating sheath (6) consisting of a thermally and pressure-stable material that is resistant to the manufacturing conditions.

2. Heater according to claim 1, **characterised in that** the thermally and pressure-stable material is compression resistant to the compaction pressure during the hot isostatic pressing process and/or resistant to the temperature during the pressing process.

3. Heater according to claim 1 or 2, **characterised in that** the thermally and pressure-stable material is formed by a sintered raw material.

4. Heater according to one of claims 1 to 3, **characterised in that** the insulating sheath (6) is made from an oxidic raw material, e.g. magnesium oxide.

5. Heater according to one of claims 1 to 4, **characterised in that** the heating cable (1) is helically bent and arranged so as to run around the flow direction.

6. Heater according to one of claims 1 to 5, **characterised in that** the two end sections (2, 3) of the heating cable (1) have an elongated shape and project side by side from one end of the channel wall.

7. Heater according to claim 6, **characterised in that** respective contact elements (7, 8) for the heating wire (5) are arranged at both ends of the heating cable (1).

8. Heater according to one of claims 1 to 7, **characterised in that** an inner radial section of the channel wall (30) is formed by a wear protection layer (27) and an outer radial section by an enclosure layer (28), the wear protection layer (27) and the enclosure layer (28) being made from different hot isostatic pressing materials.

9. Use of a heater (20) according to one of claims 1 to 8 as a forming part for extrudable materials.

10. Extruder having at least one extruder screw that is axially fixed in an extruder barrel, **characterised in that** the extruder barrel comprises at least one heater (20) according to one of claims 1 to 8.

11. Method for the powder metallurgical manufacture of a heater (20) according to one of claims 1 to 8, wherein an inner tube (22) is placed inside an outer tube (21) such that a space (26) results, **characterised in that**
- into the space (26) at least one cable sheath (4) is inserted along whose interior (6) the heating wire (5) extends and that is filled with a thermally and pressure-stable material which is compression resistant to the compaction pressure during the hot isostatic pressing process and resistant to the temperature during the pressing process;
- the space (26) is filled with a metal powder and tightly sealed so as to form a filled HIP capsule (35); and
- the HIP capsule (35) is subjected to hot isostatic pressing in order to produce a solid metal body from the metal powder.

12. Method according to claim 11, **characterised in that** the thermally and pressure-stable material is formed by a sintered raw material, e.g. magnesium oxide.

13. Method according to claim 11 or 12, **characterised in that** the sintered raw material is solidified in a helical shape (33) by the sintering process.

14. Method according to one of claims 11 to 13, **characterised in that** both ends of the cable sheath (4) are led out of the upper side of the space (26).

15. Method according to claim 14, **characterised in that** the projecting ends (2, 3) of the cable sheath (4) are surrounded by respective protection tubes (45, 46) that are subsequently filled with a thermally and pressure-stable powder material, preferably from an oxidic raw material, particularly preferably aluminium oxide, and tightly sealed.

16. Method according to one of claims 11 to 15, **characterised in that** the cable sheath (4) is arranged substantially in contact with the inner tube.

17. Method according to one of claims 11 to 16, **characterised in that** at least one solid cylinder (34) of a thermally and pressure-stable material is arranged in the inner tube (23).

## Revendications

1. Corps de chauffage (20) pour milieux coulants, plus particulièrement pour des matériaux extrusibles, qui peut être produit par pressage isostatique à chaud et comprend une paroi à canal (30), **caractérisé en ce qu'**un câble chauffant (1) électrique avec un fil chauffant (5) et une enveloppe isolante (6) pour celui-ci est implémentée dans la paroi à canal (30), l'enveloppe isolante (6) étant constituée d'un matériau stable en température et en pression qui est résistant aux conditions de fabrication.

2. Corps de chauffage selon la revendication 1, **caractérisé en ce que** le matériau stable en température et en pression est résistant en compression sous la pression de compactage pendant le pressage isostatique à chaud et/ou résistant à la température pendant le pressage.

3. Corps de chauffage selon la revendication 1 ou 2, **caractérisé en ce que** le matériau stable en température et en pression est constitué par un matériau brut fritté.

4. Corps de chauffage selon l'une des revendications 1 à 3, **caractérisé en ce que** l'enveloppe isolante (6) est constituée d'un matériau brut oxydique, par exemple d'oxide de magnésium.

5. Corps de chauffage selon l'une des revendications 1 à 4, **caractérisé en ce que** le câble chauffant (1) est incurvé en forme hélicoïdale et agencé de manière à s'étendre autour de la direction d'écoulement.

6. Corps de chauffage selon l'une des revendications 1 à 5, **caractérisé en ce que** les deux sections d'extrémité (2, 3) du câble chauffant (1) sont de forme allongée et dépassent l'une à côté de l'autre d'une extrémité de la paroi à canal.

7. Corps de chauffage selon la revendication 6, **caractérisé en ce qu'**aux deux extrémités du câble chauffant (1) sont agencés des éléments de contact (7, 8) respectifs pour le fil chauffant (5).

8. Corps de chauffage selon l'une des revendications 1 à 7, **caractérisé en ce qu'**une section radiale intérieure de la paroi à canal (30) est formée par une couche de protection contre l'usure (27) et une section radiale extérieure par une couche de boîtier (28), la couche de protection contre l'usure (27) et la couche de boîtier (28) étant constituées de différents matériaux de pressage isostatique à chaud.

9. Utilisation d'un corps de chauffage (20) selon l'une des revendications 1 à 8 en tant que partie de formage pour matériaux extrusibles.

10. Extrudeuse ayant au moins une vis d'extrusion axialement fixée dans un cylindre d'extrusion, **caractérisée en ce que** le cylindre d'extrusion comprend au moins un corps de chauffage (20) selon l'une des revendications 1 à 8.

11. Procédé de fabrication d'un corps de chauffage (20) selon l'une des revendications 1 à 8 par la technique de la métallurgie des poudres,où un tube intérieur (22) est placé dans un tube extérieur (21) de telle manière qu'un espace (26) résulte, **caractérisé en ce que**
- dans l'espace (26) est introduit au moins une enveloppe de câble (4) le long de l'intérieur (6) de laquelle s'étend le fil chauffant (5) et qui est remplie d'un matériau stable en température et en pression lequel est résistant en compression sous la pression de compactage pendant le pressage isostatique à chaud et résistant à la température pendant le pressage;
- l'espace (26) est rempli d'une poudre métallique et étanchement fermé afin de former une capsule PIC (35) remplie; et
- la capsule PIC (35) est soumise au pressage isostatique à chaud afin de produire un corps métallique solide à partir de la poudre métallique.

12. Procédé selon la revendication 11, **caractérisé en ce que** le matériau stable en température et en pression est constitué par un matériau brut fritté, par exemple l'oxyde de magnésium.

13. Procédé selon la revendication 11 ou 12, **caractérisé en ce que** le matériau brut fritté est solidifié en une forme hélicoïdale (33) par le processus de frittage.

14. Procédé selon l'une des revendications 11 à 13, **caractérisé en ce que** les deux extrémités de l'enveloppe du câble (4) sont guidées hors du haut de l'espace (26).

15. Procédé selon la revendication 14, **caractérisé en ce que** les extrémités (2, 3) dépassantes de l'enveloppe de câble (4) sont entourées par des tubes protecteurs (45, 46) respectifs qui sont ensuite remplis d'un matériau poudreux stable en température et en pression, préférablement d'un matériau brut oxydique, particulièrement préférablement d'oxyde d'aluminium, et étanchement fermés.

16. Procédé selon l'une des revendications 11 à 15, **caractérisé en ce que** l'enveloppe de câble (4) est agencée substantiellement en contact avec le tube intérieur.

17. Procédé selon l'une des revendications 11 à 16, **caractérisé en ce que** dans le tube intérieur (23) est agencé au moins un cylindre plein (34) en un matériau stable en température et en pression.
